# EUROPEAN PATENT SPECIFICATION

(11) **EP 1 004 096 B1**
(45) Date of publication and mention of the grant of the patent: **15.01.2003**
(21) Application number: 98939021.6
(22) Date of filing: 13.08.1998
(51) Int. Cl.: G07C 1/30, G07B 15/02, G07F 7/10

(54) **A PARKING FEE PAYMENT SYSTEM**
PARKGEBÜHRENVORRICHTUNG
SYSTEME DE PAIEMENT DE DROIT DE STATIONNEMENT

(30) Priority: 13.08.1997 NL 1006770
(43) Date of publication of application: 31.05.2000
(73) Proprietor: Barends, Steve Hjalmar, 1104 KJ Amsterdam (NL)
(72) Inventor: Barends, Steve Hjalmar, 1104 KJ Amsterdam (NL)
(74) Representative: Metman, Karel Johannes
(86) International application number: NL9800462
(87) International publication number: WO99009525

(56) References cited:
- EP-A- 0 495 741
- WO-A-88/09022
- WO-A-90/03016
- WO-A-93/19435
- DE-A- 2 851 596
- DE-U- 9 315 281
- FR-A- 2 680 263

## Description

The present invention relates to a parking fee payment system for the payment per unit time of the parking tariffs which are due for a vehicle in a particular area, the system comprising input means for inputting tariff data, verification means to enable verification by a parking attendant, means for exchanging data concerning a credit balance on a balance card, and means for debiting said credit balance in accordance with a specified tariff.

A device of this kind is known as the so-called Piaf meter from French company Innovatron Systèmes Urbaines (ISU). Said Piaf meter comprises all the above means in one housing, which must be present in the vehicle, balance card included, during operation, that is, during the time that the credit balance is debited in accordance with a specified tariff. The Piaf meter must thereby be mounted in a manner which enables the parking attendant to check the verification data which are displayed on a screen on the Piaf meter. To that end, the Piaf meter may be suspended from the rearview mirror, for example, or be placed on the dashboard behind the windscreen. Since the Piaf meter and the balance card present therein represents a certain value, and since its presence in the vehicle is apparent, there is a chance of someone breaking into the vehicle in order to steal the Piaf meter and the balance card (and any other valuables that may be present in the vehicle). Insurance companies will claim that the visible presence of valuables in the vehicle has provoked the theft, and they will refuse to compensate the loss.

The object of the invention is to provide a parking fee payment system of the kind referred to in the introduction, wherein the value of the part of the system that is present in the vehicle is so low that it cannot be said to provoke theft.

According to the invention, this objective is accomplished in that the system comprises a meter device which can be mounted inside the vehicle, and a charging device, which is portable.

This division of the parking fee payment system into two parts makes it possible for the charging device, which can be taken along by the user, to comprise the most valuable parts of the parking fee payment system, in particular inclusive of the balance card, so that the meter device, which remains behind in the vehicle, will provoke theft to the least possible degree.

In one embodiment of the invention, said input means for inputting tariff data and said means for exchanging data relating to a credit balance on a balance card are accommodated in the charging device. As a result of this, the balance card need not remain behind in the vehicle.

In another embodiment of the invention, the charging device furthermore comprises said debiting means as well. If the maximum parking time determined by the credit balance on the balance card is exceeded, the user can simply exchange the empty balance card for a new balance card at the location where he is present at that moment, without having to return to the parked vehicle.

According to another embodiment, the invention provides identification means, with which the part of the system that is to be left behind in the vehicle, for example the meter device, may be equipped, and which contain vehicle data, for example, so that it will be useless to steal the system from the vehicle.

To that end the meter device may be provided with a permanent, unerasable identification, which can be verified by the parking attendant, and which renders the meter device worthless when it is removed from the vehicle. Said identification may identify the user, but also, for example, the chassis number, the registration number, the type, the colour, the issuing authority and/or the producer. If the meter device is provided with such a code, it may be called an encoding device.

The identification may be very small. It may transmit permanent or intermittent signals, for example, which can be verified by a competent authority, a parking attendant, for example. Said signals may be infrared, ultrasonic or electromagnetic signals, for example. Furthermore it is possible to attach the identification in such a manner that it cannot be removed or damaged. This may be done by fixedly mounting the meter device comprising the identification in a vehicle, but also by fixing the identification separately in a vehicle. In these cases it is also possible to track down missing vehicles. This can be done by means of cellular techniques, for example, wherein a base station receives the signal from the meter device of the vehicle which has been reported missing. Subsequently, the exact location of the vehicle can be determined by means of more sophisticated equipment.

The identification may be provided not only in vehicles, but also on personal jewellery or articles such as watches, rings, medallions, spectacles, shoes, (portable) sound equipment, etc.

The charging device may furthermore comprise a verification circuit for securing the exchange of balance data with the balance card, which verification circuit functions to prevent unauthorized use of the balance card and the charging device by means of a Personal Identification Number (PIN).

According to another embodiment of the invention, the meter device, when operating (that is, when parking in an area where a parking fee is due), can only be controlled by the charging device by means of which the meter device has been set operating, whereby verification of the permanent identification or the personal identification takes place. The advantage of this arrangement is that the meter device which remains behind in the vehicle is entirely useless without the corresponding charging device, so that theft is provoked even less.

The verification of the parking data may take place by means of a known display screen, which is connected to the meter device. According to another preferred embodiment, however, the meter device furthermore comprises a transmission device to enable the transmission of verification data from the meter device to a reading device which is in the parking attendant's possession. According to another embodiment, the transmission device employs infrared, electromagnetic or ultrasonic transmission.

The preferred embodiments of the invention will be discussed hereafter with reference to the figures.

Fig. 1 is a block diagram of a preferred embodiment of the invention.

Fig. 2 is a block diagram of another preferred embodiment of the invention.

Fig. 3 is a block diagram of another embodiment of the invention, wherein the verification means are shown in more detail.

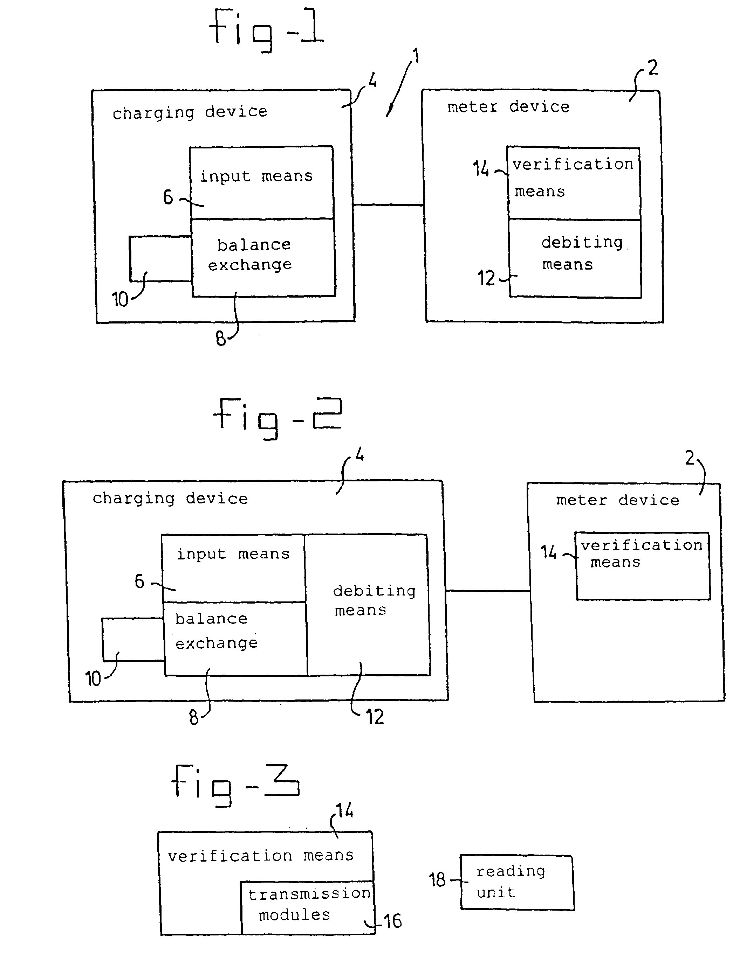

Fig. 1 shows the parking fee payment system comprising a meter device 2 and a charging device 4. The parking fee payment system is intended for paying parking fees which are due in dependence on a specific parking tariff per unit time for the area in question.

Meter device 2 must be provided in the vehicle which is parked is a specific area where parking fees are due. The meter device 2 has thereby been mounted in the vehicle in such a manner that it will not provoke theft. The charging device 4 is a device which the user must carry with him, and which can be detachably connected to the meter device 2.

Charging device 4 comprises input means 6, which are used for inputting data relating to the desired tariff, which corresponds with the tariff which is applicable for the area where the vehicle is parked, and to the balance to be transferred from balance card 10. Said input means 6 may for example consist of a keyboard comprising a display screen for checking the input data. The input data are transmitted to the debiting means 12 to be discussed hereafter.

Charging device 4 furthermore comprises means 8 for exchanging data relating to a credit balance on a balance card 10. Balance card 10 is a known card, which can be obtained against payment of a specified amount from a designated authority, on which card the balance has been electronically recorded. The balance card 10 may for example be a known card comprising a magnetic strip, or a card comprising a semiconductor circuit, in which the balance data are recorded ("smart card"). The user inserts the balance card 10 into the charging device 4, and inputs the amount to be transferred from balance card 10 to the means 8 for balance exchange by means of input means 6. The authority which issues the balance cards and which carries out the verification can determine whether the user can indicate a particular desired balance, or whether a fixed balance is to be transferred each time. The authority can also determine whether the balance present on the balance card is also the maximum balance which can be transferred, or whether a higher limit or no limit at all will be set as regards the balance to be transferred. In the latter case, the user must transfer the balance to the means 8 for balance exchange afterwards. In that case it is advisable to programme the parking fee payment system so that a next parking period cannot commence before the preceding period has been paid for. After the parking period has elapsed, a positive balance that may be present can be reversed to balance card 10.

The data with regard to the parking tariff and the input credit balance are transmitted to the debiting means 12, which, according to one embodiment of the invention, are present in meter device 2. The debiting means debit the credit balance with the parking tariff per unit time for the area in question.

Data with regard to the input tariff zone (or the corresponding parking area), the time at which the parking was started and an indication that a credit balance remains and will be debited, are transmitted by the debiting unit to the verification means 14, which are present in meter device 2. In one preferred embodiment of the invention, said data are shown in such a manner that a parking attendant can verify them. This may take place, for example, by means of a display screen which is placed behind the windscreen of the vehicle.

Another preferred embodiment of the invention is shown in Fig. 2. In this embodiment, charging device 4 rather than meter device 2 comprises the debiting means 12. This makes it possible to realise a further reduction of the meter device 2, so that its value will be even lower, as a result of which it will provoke theft even less. Furthermore, the user can exchange a balance card 10 whose credit balance has been used up for a balance card 10 containing a credit balance at the location where the user is present at that point in time, and he does not need to return to the parked vehicle. In this embodiment, an indication of the maximum parking time that remains is given to the verification means 14, rather than an indication of the credit balance that remains and that will be debited.

Fig. 3 shows an elaboration of the verification means 14 which the meter device 2 comprises. In the simplest embodiment, the verification means 14 comprise a display screen (not shown), which displays the verification data, either integrally or sequentially. In another embodiment of the invention the verification means 14 comprise transmission means 16 and a reading device 18. In that aspect, reading device 18 has been physically separated from meter device 2, it is in the parking attendant's possession. The transmission means 16 transform the verification data and send it to the reading device 18. This may take place by means of transmission with infrared signals, for example, whereby the transmission means 16 comprise at least one infrared transmitter, and whereby the reading device 18 comprises at least one infrared receiver. Alternatively, the transmission can take place via electromagnetic or ultrasonic waves.

In another embodiment of the invention, the meter device 2 comprises a non-erasable identification, for example the registration number of the vehicle, the chassis number, the user, the issuing authority and/or the producer, whereby the identification can be verified by the parking attendant as part of the verification data.

In yet another embodiment of the invention, the charging device 4 furthermore comprises a verification circuit for preventing, by means of a Personal Identification Number (PIN), unauthorized use of the balance card 10 and the charging device 4.

According to one embodiment of the invention, the meter device 2, when operating (that is, when parking in an area where a parking fee is due), can only be controlled by the charging device 4 by means of which the meter device has been set operating. Both the non-erasable identification and the PIN code may be used to check this. This aspect renders the meter device 2 even more useless once it has been stolen.

It is a matter of course that a person skilled in the art will be able to derive other embodiments of the device from the above.

## Claims

1. A parking fee payment system for the payment per unit time of the parking tariffs which are due for a vehicle in a particular area, the system comprising:
input means for inputting tariff data;
verification means to enable verification by a parking attendant;
means for exchanging data concerning a credit balance on a balance card; and
means for debiting said credit balance in accordance with a specified tariff,
**characterized in that** said system has been divided into:
a meter device (2), which can be mounted in the vehicle, and
a charging device (4), which is portable.

2. A parking fee payment system according to claim 1, **characterized in that** said input means (6) for inputting tariff data and said means (8) for exchanging data relating to a credit balance on a balance card (10) are accommodated in the charging device (4).

3. A parking fee payment system according to claim 2, **characterized in that** said meter device (2) and said charging device (4) are provided with means for transmitting the tariff data to the meter device (2).

4. A parking fee payment system according to claim 1 or 2, **characterized in that** said means (12) for debiting the credit balance in accordance with an input tariff are accommodated in said charging device (4).

5. A parking fee payment system according to claim 1, 2, 3 or 4, **characterized in that** said meter device (2) has been provided with a permanent identification.

6. A parking fee payment system according to claim 5, **characterized in that** said permanent identification comprises data relating to the vehicle, for example the registration number, the chassis number, the type, the colour, etc.

7. A parking fee payment system according to any one of the preceding claims 1 - 6, **characterized in that** said charging device (4) furthermore comprises a circuit for verifying a personal identification before exchanging credit balance data with said balance card (10).

8. A parking fee payment system according to claim 6 or 7, **characterized in that** when the meter device (2) is in operation, it can only be controlled by the charging device (4) by means of which it has set operating, whereby verification of said permanent identification or said personal identification takes place.

9. A parking fee payment system according to any one of the preceding claims 1 - 8, **characterized in that** said verification means (14), in order to enable verification by a parking attendant, comprise a transmission module (16) present in said meter device (2) and a portable reading unit (18).

10. A parking fee payment system according to claim 9, **characterized in that** said reading unit (18) receives the verification data from said meter device (2) via infrared, electromagnetic or ultrasonic transmission.

## Patentansprüche

1. Parkgebühr-Bezahlsystem zur Bezahlung von Parktarifen pro Zeiteinheit, die für ein Fahrzeug in einem speziellen Bereich fällig sind, wobei das System umfasst:
Eingabemittel zur Eingabe von Tarifdaten,
Prüfmittel, welche die Nachprüfung durch einen Parkwächter ermöglichen;
Mittel zum Austausch von Daten betreffend einen Soll-Saldo auf einer Saldenkarte und Mittel zur Belastung des Soll-Saldos gemäß einem festgelegten Tarif,
**dadurch gekennzeichnet, dass** das System unterteilt ist in:
eine Zählereinrichtung (2), die im Fahrzeug angeordnet werden kann, und
eine Gebührenberechnungseinrichtung (4), die tragbar ist.

2. Parkgebühr-Bezahlsystem nach Anspruch 1, **dadurch gekennzeichnet, dass** die Eingabemittel (6) für die Eingabe der Tarifdaten und die Mittel (8) zum Austausch von Daten bezüglich eines Soll-Saldos auf einer Saldenkarte (10) in der Gebührenberechnungseinrichtung (4) aufgenommen werden.

3. Parkgebühr-Bezahlsystem nach Anspruch 2, **dadurch gekennzeichnet, dass** die Zählereinrichtung (2) und die Gebührenberechnungseinrichtung (4) mit Mitteln zur Übertragung der Tarifdaten zu der Zählereinrichtung (2) versehen sind.

4. Parkgebühr-Bezahlsystem nach Anspruch 1 oder 2, **dadurch gekennzeichnet, dass** die Mittel (12) zur Belastung des Soll-Saldos gemäß einem Eingabetarif in der Gebührenberechnungseinrichtung (4) aufgenommen werden.

5. Parkgebühr-Bezahlsystem nach Anspruch 1, 2, 3 oder 4, **dadurch gekennzeichnet, dass** die Zählereinrichtung (2) mit einer permanenten Identifikation versehen ist.

6. Parkgebühr-Bezahlsystem nach Anspruch 5, **dadurch gekennzeichnet, dass** die permanente Identifikation Daten bezüglich des Fahrzeuges umfasst, z. B. die Registriemummer, die Chassis-Nummer, den Typ, die Farbe usw.

7. Parkgebühr-Bezahlsystem nach irgendeinem der vorangehenden Ansprüche 1-6, **dadurch gekennzeichnet, dass** die Gebührenberechnungseinrichtung (4) ferner einen Schaltkreis zur Überprüfung einer persönlichen Identifikation vor dem Austausch von Soll-Saldo-Daten mit der Saldenkarte (10) umfasst.

8. Parkgebühr-Bezahlsystem nach Anspruch 6 oder 7, **dadurch gekennzeichnet, dass**, wenn die Zählereinrichtung (2) sich im Betrieb befindet, sie nur durch die Gebührenberechnungseinrichtung (4) gesteuert werden kann, durch die sie in Betrieb gesetzt worden ist, wodurch die Überprüfung der permanenten Identifikation oder der persönlichen Identifikation stattfindet.

9. Parkgebühr-Bezahlsystem nach irgendeinem der vorangehenden Ansprüche 1-8, **dadurch gekennzeichnet, dass** die Überprüfungsmittel (14), um eine Überprüfung durch einen Parkwächter zu ermöglichen, ein in der Zählereinrichtung (2) vorhandenes Übertragungsmodul (16) und eine tragbare Leseeinheit (18) umfassen.

10. Parkgebühr-Bezahlsystem nach Anspruch 9, **dadurch gekennzeichnet, dass** die Leseeinheit (18) die Überprüfungsdaten von der Zählereinrichtung (2) über Infrarot-, elektromagnetische oder Ultraschall-Übertragung empfängt.

## Revendications

1. Un système de paiement de droit de stationnement pour le paiement par unité de temps des tarifs de parking qui sont dus pour un véhicule dans une zone particulière, le système comprenant:
des moyens d'introduction pour introduire des données tarifaires ;
des moyens pour l'échange de données concernant un solde de crédit sur une carte de solde;
des moyens pour débiter cette carte de solde conformément à un tarif spécifique,
**caractérisé par le fait que** ce système est divisé en:
un appareil de mesure (2), qui peut être monté sur le véhicule et
un dispositif de facturation (4), portable.

2. Un système de paiement de droit de stationnement suivant la revendication 1, **caractérisé par le fait que** les moyens d'introduction (6) pour introduire les données du tarif et les moyens (8) pour l'échange de données concernant un solde de crédit sur la carte de solde (10) sont installés dans le dispositif de facturation (4).

3. Un système de paiement de droit de stationnement suivant la revendication 2, **caractérisé par le fait que** l'appareil de mesure (2) et le dispositif de facturation (4) sont munis de moyens de transmission des données tarifaires à l'appareillage de mesure (2).

4. Un système de paiement de droit de stationnement suivant la revendication 1 ou 2, **caractérisé par le fait que** les moyens (12) pour débiter la carte de solde conformément à un tarif enregistré est installé dans le dispositif de facturation (4).

5. Un système de paiement de droit de stationnement suivant la revendication 1, 2, 3 ou 4, **caractérisé par le fait que** l'appareil de mesure (2) est muni d'une identification permanente.

6. Un système de paiement de droit de stationnement suivant la revendication 5, **caractérisé par le fait que** l'identification permanente comporte des données relatives au véhicule, par exemple le numéro minéralogique, le numéro du châssis, le type, la couleur, etc.

7. Un système de paiement de droit de stationnement suivant l'une quelconque des revendications 1 à 6,
**caractérisé par le fait que** le dispositif de facturation (4) comprend de plus un circuit pour vérifier une identification personnelle avant d'échanger des données de solde de crédit avec la carte de solde (10).

8. Un système de paiement de droit de stationnement suivant la revendication 6 ou 7, **caractérisé par le fait que**, lorsque l'appareil de mesure (2) est en action, il ne peut être commandé que par le dispositif de facturation (4) au moyen duquel il a été mis en action, de sorte que la vérification de l'identification personnelle intervient.

9. Un système de paiement de droit de stationnement suivant n'importe laquelle des revendications précédentes 1 à 8, **caractérisé par le fait quel** les moyens de vérification (14), afin de permettre toute vérification par un préposé au parking, comportent un module de transmission (16) installé dans l'appareil de mesure (2) et une unité portable (18) de lecture.

10. Un système de paiement de droit de stationnement suivant la revendication 9, **caractérisé par le fait que** l'unité portable (18) de lecture reçoit les données de vérification en provenance de l'appareil de mesure (2) via une transmission infrarouge, électromagnétique ou par ultrasons.
